# DEMANDE DE BREVET EUROPEEN

(11) **EP 0 665 413 A1**
(43) Date de publication de la demande: **02.08.1995**
(21) Numéro de dépôt: 95400145.9
(22) Date de dépôt: 24.01.1995
(51) Int. Cl.: F28D 20/00

(54) **Dispositif de stockage d'énergie calorifique**

(30) Priorité: 28.01.1994 FR 9400959
(71) Demandeur: THOMSON-CSF, 75008 Paris (FR)
(72) Inventeur: Delvinquier, Jean-Pierre, F-92402 Courbevoie Cédex (FR); Girardet, Christian, F-92402 Courbevoie Cédex (FR); Grignon, Robert, F-92402 Courbevoie Cédex (FR)
(74) Mandataire: Benoit, Monique

(57) **Abrégé**

L'invention concerne un dispositif de stockage d'énergie calorifique.

Le dispositif est constitué d'une structure poreuse (1) continue et conductrice de la chaleur, la structure poreuse (1) étant imprégnée d'un matériau (2) à changement de phase.

Application : Notamment la stabilisation en température de composants électroniques en fonctionnement.

## Description

La présente invention concerne un dispositif de stockage d'énergie calorifique. Elle s'applique notamment à des matériels électroniques pour évacuer les calories produites par le fonctionnement de composants électroniques, permettant ainsi d'éviter un échauffement excessif de ces derniers.

En fonctionnement, les composants électroniques dissipent une énergie qui entraîne une augmentation continue de leur température, plus ou moins rapide. Sans système d'évacuation de l'énergie, la température d'un composant augmente jusqu'à atteindre sa température limite de fiabilité et au-delà sa température limite de fonctionnement dont le dépassement provoque sa destruction.

Pour évacuer les calories vers le milieu extérieur, il est connu d'utiliser par exemple des ventilateurs, des fluides caloporteurs ou des radiateurs par exemple. Dans le cas où le système d'évacuation ne peut pas transférer la totalité des calories produites vers le milieu extérieur, il est habituel de dimensionner largement la structure métallique servant de support physique aux composants électroniques et d'utiliser la capacité calorifique de ce support pour limiter l'élévation de température.

Ces solutions ne permettent pas la réduction de poids et de taille des circuits électroniques et à plus forte raison leur miniaturisation, elles provoquent au contraire une augmentation de poids et de taille. Or, beaucoup d'applications, tout en nécessitant des circuits de plus en plus complexes, dissipant de plus en plus d'énergie, nécessitent en même temps une réduction de poids et de taille, notamment pour des exigences de performances associées à des encombrements disponibles de plus en plus réduits.

Une autre solution connue pour évacuer la chaleur consiste à utiliser la chaleur latente de changement de phase d'un composé choisi pour posséder une transition dans la gamme de température correspondant au domaine de fonctionnement normal d'un équipement électronique. L'énergie dissipée est alors absorbée par la chaleur latente nécessaire au changement de phase du composé.

Les matériaux à changement de phase envisagés peuvent appartenir à différentes familles chimiques, ces matériaux peuvent être par exemple des cristaux liquides, des polyols, des alcanes, des acides gras ou des dérivés du benzène.

Dans le cadre d'applications électroniques notamment, cette dernière solution présente l'inconvénient de ne pas permettre un transfert rapide de l'énergie car tous les matériaux à changement de phase connus et susceptibles d'être utilisés ont une conductivité thermique trop faible, généralement de l'ordre de 0,2 à 0,5 W/m.K. L'énergie dissipée par un composant électronique n'étant pas alors transférée assez rapidement, il s'ensuit que dans la plupart des cas d'application, la température de ce dernier a largement le temps de croître jusqu'à atteindre une température limite avant qu'un matériau à changement de phase stabilise sa température à un niveau prédéterminé.

Certaines solutions tentent de surmonter cet inconvénient, par exemple par l'utilisation de charges métalliques sous forme de poudre ou de paillettes dont le rôle est notamment de former des ponts facilitant la répartition de l'énergie au sein du matériau à changement de phase. Dans ce cas, il est nécessaire d'utiliser une forte proportion de charge supérieure à la quantité de matériau à changement de phase, pour atteindre une conductivité suffisamment élevée, ce qui conduit à perdre une partie importante du pouvoir de stockage d'énergie dû au changement de phase du matériau. Il est encore possible d'associer à un matériau à changement de phase un échangeur compact, à ailettes par exemple. Cependant, le coût de réalisation est alors élevé et les géométries obtenues s'adaptent mal à des composants électroniques.

Le but de l'invention est de pallier les inconvénients précités notamment en permettant une bonne stabilisation de la température de composants électroniques avec un transfert rapide de chaleur vers un matériaux capable de stocker l'énergie thermique grâce à sa chaleur latente.

A cet effet, l'invention a pour objet un dispositif de stockage d'énergie calorifique caractérisé en ce qu'il est constitué d'une structure poreuse continue et conductrice de la chaleur, la structure poreuse étant imprégnée d'un matériau à changement de phase, l'ensemble se présentant comme un composite à matrice à changement de phase et renfort très bon conducteur de la chaleur.

L'invention a pour principaux avantages qu'elle permet une réduction de taille et de poids des circuits électroniques, qu'elle améliore leur fiabilité, qu'elle s'adapte à tous les types de circuits, qu'elle est économique et qu'elle est simple à mettre en oeuvre.

D'autres caractéristiques et avantages de l'invention apparaîtront à l'aide de la description qui suit faite en regard de dessins annexés qui représentent :
- la figure 1, un premier mode de réalisation possible d'un dispositif selon l'invention ;
- la figure 2, un deuxième mode de réalisation possible d'un dispositif selon l'invention.

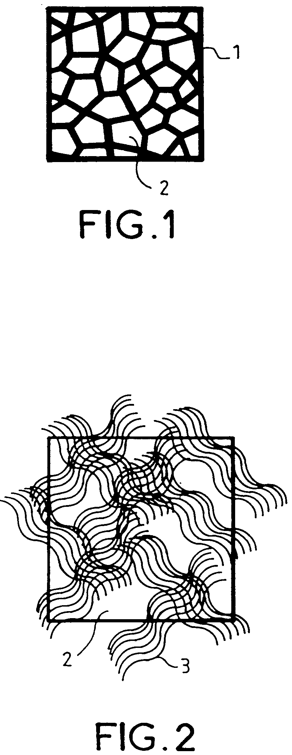

La figure 1 présente un premier mode de réalisation possible d'un dispositif selon l'invention. Il comporte au moins une structure continue poreuse 1, réalisée par exemple dans un matériau de forte conductivité thermique, cette structure continue poreuse 1 étant imprégné d'un matériau à changement de phase 2. Cette structure poreuse 1 se présente donc par exemple comme une éponge rigide capable d'absorber une grande proportion de matériau à changement de phase à l'état liquide. Dans l'exemple de réalisation de la figure 1, la structure continue poreuse est par exemple en cuivre ou en aluminum. Sa forte conductivité thermique permet le transfert rapide des calories, d'un ou plusieurs composants électroniques par exemple, alors que le matériau à changement de phase absorbe l'énergie transférée et répartie en son sein, cette énergie étant notamment absorbée lors du changement de phase de ce matériau qui s'effectue à température constante ou du moins dans une plage de température réduite suffisante pour stabiliser la température d'un composant électronique par exemple. La quantité d'énergie transférée du composant pendant le changement de phase du matériau correspond à la chaleur latente de ce dernier. L'utilisation du changement de phase du matériau 2 est de préférence utilisée pour son passage de l'état solide à l'état liquide, ou encore pour un passage d'un état solide à un autre état solide, par exemple par le passage d'une structure cristalline à une autre par exemple. L'avantage d'une transition solide-solide, c'est qu'il n'y a pas besoin d'encapsulage, contrairement au cas d'une phase solide-liquide ou liquide-solide.

Le matériau à changement de phase est ainsi utilisé d'une façon compatible avec une rapidité suffisante de transfert de chaleur dissipée par des composants électroniques, du moins pendant le changement de phase. Ce résultat est obtenu par suite de la dispersion du matériau à changement de phase en une multitude de petites cellules dont les parois sont constituées d'un matériau, par exemple très bon conducteur de la chaleur. Dans l'exemple de réalisation de la figure 1, le diamètre typique d'une cellule peut être de 0,4 mm pour une épaisseur de paroi de cuivre de l'ordre de 0,1 mm. Le gradient thermique global est fortement réduit par le transfert assuré par la structure poreuse. Une conductivité thermique globale de l'ordre de 10 W/m.K peut être obtenue et la totalité du volume du matériau à changement de phase peut participer au stockage de l'énergie, puisque toutes les cellules de ce matériau réparties dans la structure poreuse peuvent participer simultanément à ce stockage grâce à la bonne conductivité thermique de la structure poreuse.

La figure 2 présente un autre mode de réalisation possible d'un dispositif selon l'invention. La structure poreuse est constituée de fibres de carbone 3 ayant la forme de fils très fins regroupés en torons. Les fibres de carbones présentent par exemple un diamètre de l'ordre de 100 µm. A l'intérieur d'un toron, les interstices entre fibres sont par exemple eux aussi de l'ordre de 100 µm. La structure poreuse en fibre de carbone est imprégnée d'un matériau à changement de phase 2. Les fibres de carbone 3 permettent d'assurer une bonne conduction thermique alors que le matériau à changement de phase 2 peut stabiliser la température d'un ou plusieurs composants électroniques à sa température de transition, du passage de l'état solide à l'état liquide par exemple.

Le remplissage d'une structure poreuse 1, 3 par un matériau à changement de phase peut par exemple être réalisée par un procédé industriel d'imprégnation sous vide à l'état fondu. D'autres procédés peuvent encore être mis en oeuvre tel que par exemple un procédé de condensation de vapeur du matériau à changement de phase ou un procédé faisant appel à un lit fluidisé dans lequel le produit est mis en poudre, puis mis en suspension par un jet d'air.

Outre la bonne conductivité thermique, la structure poreuse 1, 3 permet d'assurer la rigidité mécanique du dispositif selon l'invention. Ce dernier peut être réalisé dans n'importe quelle forme avec n'importe quelle dimension. Il peut notamment être usiné pour s'adapter à la forme de composants électronique donnés ou de matériels les comportant. En plus du cuivre et du carbone, d'autres matériaux peuvent être utilisés, de l'aluminium ou du béryllium par exemple. Le matériau à changement de phase est par exemple constitué de cristaux liquides, de polyols, d'alcanes, d'acides gras ou de dérivés de benzène par exemple.

Dans le cas d'application à des matériels électroniques, ceux-ci sont notamment choisis en fonction de la température de stabilisation envisagée pour les composants électroniques, de l'ordre de 60 à 100°C par exemple, d'autres températures étant envisageables.

Le dispositif selon l'invention peut par exemple contenir une enveloppe, notamment de protection, pour contenir le matériau à changement de phase quand celui-ci passe à l'état liquide. Cette enveloppe peut assurer également une protection vis à vis de l'environnement. Un moyen peut par exemple être prévu pour absorber la variation de volume du matériau 2 lors de son changement de phase. Ce moyen est par exemple constitué d'une zone déformable de l'enveloppe ou encore par un remplissage partiel de l'enveloppe laissant des volumes gazeux compressibles.

Les dimensions de la structure poreuse 1, 3 sont par exemple choisies en fonction du flux de calories à absorber. La proportion de matériau à changement de phase par rapport à cette structure peut être d'autant plus importante que ce flux est faible.

Pour que le dispositif selon l'invention ait un bon pouvoir de stockage, il est préférable notamment que l'enthalpie de transition ou chaleur latente du matériau à changement de phase soit la plus grande possible. Celle des alcanes est de l'ordre de 250 J/g avec des températures de transition comprises entre 70 et 90°C environ.

Dans l'exemple de réalisation de la figure 1, où la structure poreuse est en cuivre, la proportion de matériau à changement de phase est par exemple de l'ordre de 90%. Dans l'exemple de réalisation de la figure 2, où la structure poreuse est en carbone, cette proportion est par exemple de l'ordre de 75%.

L'utilisation de dispositifs selon l'invention dans des matériels électroniques permet une réduction d'encombrement et de poids de ces derniers grâce à la quantité d'énergie qu'ils peuvent stocker relativement à leurs dimensions et à leur poids. Ils améliorent aussi la fiabilité des composants électroniques en permettant une meilleure stabilisation de leur température de fonctionnement.

## Revendications

1. Dispositif de stockage d'énergie calorifique caractérisé en ce qu'il est constitué d'une structure poreuse (1, 3) continue et conductrice de la chaleur, la structure poreuse (1, 3) étant imprégnée d'un matériau (2) à changement de phase, le dispositif absorbant l'énergie dissipée par un ou plusieurs composants électroniques permettant de limiter l'échauffement de ces derniers.

2. Dispositif selon la revendication 1, caractérisé en ce qu'il comporte une enveloppe.

3. Dispositif selon la revendication 2, caractérisé en ce que l'enveloppe comporte un moyen pour absorber la variation de volume du matériau (2) lors de son changement de phase.

4. Dispositif selon la revendication 3, caractérisé en ce que le moyen est constitué d'une zone déformable de l'enveloppe.

5. Dispositif selon la revendication 3, caractérisé en ce que le moyen est constitué par un remplissage partiel de l'enveloppe laissant des volumes gazeux compressibles.

6. Dispositif selon l'une quelconque des revendications précédentes, caractérisé en ce que pour le stockage de l'énergie calorifique, le changement de phase se fait de l'état solide à l'état liquide.

7. Dispositif selon l'une quelconque des revendications 1 à 6, caractérisé en ce que pour le stockage de l'énergie calorifique, le changement de phase se fait d'un état solide à un autre état solide.

8. Dispositif selon la revendication 7, caractérisé en ce que pour le stockage de l'énergie calorifique, le changement de phase se fait d'une structure cristalline à une autre.

9. Dispositif selon l'une quelconque des revendications précédentes, caractérisé en ce que la structure poreuse (1) est en cuivre.

10. Dispositif selon l'une quelconque des revendications 1 à 7, caractérisé en ce que la structure poreuse (3) est en fibre de carbones, ces fibres étant regroupées en torons.
